# EUROPEAN PATENT APPLICATION

(11) **EP 2 846 288 A2**
(43) Date of publication of application: **11.03.2015**
(21) Application number: 13006044.5
(22) Date of filing: 23.12.2013
(51) Int. Cl.: G06K 9/00

(54) **Dynamic Image Analyzing System And Operating Method Thereof**

(30) Priority: 05.09.2013 TW 102132030
(71) Applicant: Utechzone Co., Ltd., 235 New Taipei City (TW)
(72) Inventor: Lin, Chieh-Yu, 235 NEW Taipei City (TW)
(74) Representative: Müller-Boré & Partner Patentanwälte PartG mbB

(57) **Abstract**

A dynamic image analyzing system is provided, comprising: a photographing unit for taking pictures to acquire image, and a processing unit. The processing unit includes a space information analyzing module, a virtual frame forming module, and a transforming module. The space information analyzing module is used to acquire space information of user at the world coordinate system. The virtual frame forming module is used to access the space information of user at world coordinate system and to span a virtual operating frame in front of user, wherein the virtual operating frame comprises a plurality of projecting coordinate systems disturbed in front of user, between two projecting coordinate systems has an angle, and the projecting coordinate systems are sequentially sorted into a semi-arc surface. The transforming module is used to compute the position of user's hands at the world coordinate system into the projecting position at the projecting coordinate systems.

## Description

### BACKGROUND OF THE INVENTION

### 1. Field of the Invention

The present invention relates to a dynamic image analyzing system and operating method thereof. In particular, the present invention relates to a dynamic image analyzing system and operating method thereof for generating a vertical virtual operating frame which comprises arc-shaped projecting coordinate system for corresponding to the arc-shaped trajectory while a user's hands is moving to left, right, up or down sides, and transforming the positions of the user's hands at the world coordinates system into projecting positions.

### 2. Description of the Related Art

By the development of image controlling technology, a user can command the computer or other hardware device through the body movement of themselves. This technology is widely used in computer game, advertising and marketing, and information displaying, etc. The user will swing his arms frequently in the process of image controlling, When the user's hands are moving laterally(left, right, up and down), the trajectory of the hand is similar to an arc-shape because the arm joint brings the arm backward. The backward displacement of the user's arm will not be shown on the planar screen of a camera, so the image controlling system only detects the arms swing to lateral direction and the speed slowing down; but according to the user's perception, the strength of swinging his arm is constant, which causes the detected displacement of the image controlling system with that by the user's perception are not synchronized. Therefore, when the image controlling system detects the user's hand movement image, the lateral projection of hands should be amended for providing the user to control the system intuitively.

For solving the above problem, US Publication No. US 2010/302145 A1 discloses a technology on virtual desktop coordinate transformation. The prior art defines a space coordinate according to the image of a user at real space coordinate (also called "world coordinate system"), where the space coordinate is formed by following the rotation or movement with respect to the user, and the prior art generates two shell-shaped virtual operating frame correspond to the user's hand respectively for compensating the projection reduced on the lateral direction.

However, when the user straightens his hand trying to control the image controlling system, the arc-trajectory effect of the user's hand is not apparent significantly. Regular photograph equipment gives 2-deimentional planar image in. It takes sophisticated computation to transform the planar image into the spherical surface. Therefore, the aforesaid prior art has to use a higher precision image capturing equipment and requires a faster processor, which increases the cost of manufacture. Furthermore, the size of the aforesaid virtual operating frame is fixed, so it will not be adjusted to adapt the body type of the user, which causes the image controlling system can't exactly represent the action of the user.

### SUMMARY OF THE INVENTION

The purpose of the present invention is to overcome the shortcomings of the prior art that are the computation of the body movement of user is too complicated and the size of the virtual operating frame could not be adjusted corresponding to a user's body type.

To solve the above mentioned problem, the present invention is to provide a dynamic image analyzing system, comprising: a photograph unit and a processing unit. The photograph unit is to acquire images; and the processing unit comprises a space information analyzing module, a virtual frame forming module, and a transforming module; wherein the space information analyzing module is used to acquire space information about the user at a world coordinate system; the virtual frame forming module is used to acquire the space information about the user at the world coordinate system and to form a vertical virtual operating frame in front of the user where the vertical virtual operating frame comprises a plurality of vertical projecting coordinate systems vertically arranged in front of the user, and an angle is disposed between two adjacent vertical projecting coordinate systems while the vertical projecting coordinate systems are sequentially arranged into an arc-like surface; and the transforming module, used to transform the positions of the user's hands at the world coordinate system into the projecting positions at the vertical projecting coordinate systems.

Another preferred objective of the invention is that said vertical virtual operating frame comprises a middle virtual frame; an upper virtual frame, located on top of the middle virtual frame and extends toward the backside of the user; and a lower virtual frame, located on bottom of the middle virtual frame and extends toward the backside of the user.

Another objective of the present invention is to provide a dynamic image analyzing system, comprises: a photograph unit and a processing unit. The dynamic image analyzing system is used to acquire images; and the processing unit including a space information analyzing module, a virtual frame forming module, and a transforming module; wherein the space information analyzing module is used to acquire space information of a user at a world coordinate system; the virtual frame forming module is used to acquire the space information about the user at the world coordinate system and to form a horizontal virtual operating frame in front of the user where the horizontal virtual operating frame comprises a first projecting coordinate system horizontally arranged in front of the user, and two second projecting coordinate systems distributed at both sides of the first projecting coordinate system and formed an inclined angle with the first projecting coordinate system that extends toward the backside of the user; and the transforming module, used to transform the positions of the user's hands at the world coordinate system into the projecting positions at the horizontal projecting coordinate systems.

Another preferred objective of the invention is that said inclined angle is between 90° and 45°.

Another objective of the present invention is to provide a dynamic image analyzing system, comprising: a photograph unit and a processing unit. The dynamic image analyzing system is used to acquire image; and the processing unit including a space information analyzing module, a virtual frame forming module, and a transforming module, wherein the space information analyzing module is used to acquire space information of a user at a world coordinate system; the virtual frame forming module is used to acquire the space information of the user at the world coordinate system and to form a vertical virtual operating frame and a horizontal virtual operating frame in front of the user where the vertical virtual operating frame comprises a plurality of vertical projecting coordinate systems vertically arranged in front of the user, and an angle is disposed between two vertical projecting coordinate systems while the vertical projecting coordinate systems are sequentially arranged into an arc-like surface, and the horizontal virtual operating frame comprises a first projecting coordinate system horizontally arranged in front of the user and two second projecting coordinate systems distributed at both sides of the first projecting coordinate system and formed an inclined angle with the first projecting coordinate system that extends toward the backside of the user; and the transforming module is used to transform the positions of the user's hands at the world coordinate system into the projecting positions at the vertical projecting coordinate systems and the horizontal projecting coordinate systems.

Another objective of the present invention is to provide a dynamic image analyzing system, comprising: a photograph unit and a processing unit. The dynamic image analyzing system is used to acquire images; and the processing unit comprises a space information analyzing module, a virtual frame forming module, and a transforming module, wherein the space information analyzing module is used to acquire space information about a user at a world coordinate system; the virtual frame forming module is used to acquire the space information of the user at the world coordinate system, generate a piece of shoulder center information, and form a virtual operating frame according to the position of the shoulder center information, and the virtual operating frame comprises a plurality of virtual frame projecting coordinate systems; and the transforming module is used to transform the positions of the user's hands at the world coordinate system into the projecting positions at the virtual frame projecting coordinate systems.

Another preferred objective of the invention is that said space information includes a shoulder width of the user, and the width and the height of the virtual operating frame are proportional to the shoulder width.

Another preferred objective of the invention is that said virtual frame forming module generates the virtual operating frame according to the shoulder center information width at a predefine distance in front of the user.

Another objective of the present invention is to provide a method for analyzing dynamic image, at least comprising: (a) acquiring space information about a user at a world coordinate system; (b) forming a vertical virtual operating frame in front of the user according to the space information of the user at the world coordinate system where the vertical virtual operating frame comprises a plurality of vertical projecting coordinate systems, and an angle is disposed between two adjacent vertical projecting coordinate systems, and the vertical projecting coordinate systems are sequentially arranged into a arc-like surface; (c) forming a horizontal virtual operating frame in front of the user according to the space information of the user at the world coordinate system where the horizontal virtual operating frame comprises a first projecting coordinate system horizontally arranged in front of the user, and two second projecting coordinate systems distributed at both sides of the first projecting coordinate system and formed an inclined angle with the first projecting coordinate system that extends toward the backside of the user; and (d) transforming the positions of the user's hands at the world coordinate system into the projecting positions at the vertical virtual operating frame and the horizontal virtual operating frame.

Another preferred objective of the invention is that said method further comprises a step (e) between the step (b) and step (c) as follows: acquiring a piece of shoulder center information from the space information, and determining a virtual frame anchor point according to the shoulder center information; generating a vertical virtual operating frame and a horizontal virtual operating frame based on the virtual frame anchor point from a predefined distance in front of the user; and acquiring a shoulder width from the space information, and adjusting the width and the height of the vertical virtual operating frame and the horizontal virtual operating frame according to the shoulder width.

Another preferred objective of the invention is that said method further comprises a step (f) after the step (c) as follows: computing a displacement of the user shoulders and returning to the step (a) when the displacement is greater than a threshold value.

Another preferred objective of the invention is that said method further comprises a step (g) after step (b) or step (c) as follows: if the user's hands do not enter the vertical virtual operating frame or the horizontal virtual operating frame, returning to the step (a).

Another preferred objective of the invention is that said method further comprises a step (h) before the step (a) as follows: taking a shot from a photograph area; repeating this step if the user isn't in the photograph area; and repeating this step if the user isn't in a controlled area.

Another objective of the present invention is to provide a dynamic image analyzing system, comprising: a photograph unit and a processing unit. The photograph unit is used to acquire images; and the processing unit comprises a space information analyzing module, a virtual frame forming module, and a transforming module; wherein the space information analyzing module is used to acquire space information about a user at a world coordinate system; the virtual frame forming module is used to acquire the space information of the user at the world coordinate system and to form a virtual operating frame in front of the user where the virtual operating frame comprises a plurality of projecting coordinate systems distributed in front of the user, and an angle is disposed between two adjacent projecting coordinate systems while the projecting coordinate systems are sequentially arranged into an arc-like surface; and the transforming module is used to transform the positions of the user's hands at the world coordinate system into the projecting position at the projecting coordinate systems.

Therefore, the present invention features the following advantages by comparing with the prior art:
1. The vertical virtual operating frame and the horizontal virtual operating frame of the present invention generate a plurality of projecting coordinate systems according to arc-shaped trajectory formed by the user's arms movements, and these projecting coordinate systems are gathered toward the backside of the user for enabling the virtual operating frames to form an arc-like area, and transforming the positions of the user's hands at the world coordinate systems into projecting positions.
2. The virtual operating frame of the present invention can refer to the specific part (such as the center of two shoulders) as a reference point. No matter whether the user is in walking or spinning, the virtual operating frame always keeps in the front of the user. Besides, once the reference point is located at the user's shoulder, the size of the virtual frame can be decided by the width of the shoulders of the user, to adapt to the body shape of different users for operating. There is a predefined distance between the virtual operating frame and the user. If the user's hand does not exceed the predefined distance, it won't enter the virtual operating frame. This design of the predefined distance can exclude the non-intentional operations such as cross arms or hands on waist, which reduce the probability of mistaken detection.

To improve understanding of the invention of the disclosure, the techniques employed in the patent invention to achieve the foregoing problems, characteristics and effects thereof are described hereinafter by the way of examples with reference to the accompanying drawings.

### BRIEF DESCRIPTION OF THE DRAWINGS

FIG. 1 shows a block diagram of the dynamic image analyzing system of a preferred embodiment of the present invention.
FIG. 2 shows a schematic diagram and lateral diagram of the vertical virtual operating frame of a preferred embodiment of the present invention.
FIG. 3 shows a schematic diagram and lateral diagram of the horizontal virtual operating frame of a preferred embodiment of the present invention.
FIG. 4 to FIG.6 shows a flow chart of the method for dynamic image analyzing of a preferred embodiment of the present invention.

### DETAILED DESCRIPTION OF THE PREFERRED EMBODIMENTS

In the following detailed description, only certain exemplary embodiments of the present invention are shown and described, by way of illustration. As those skilled in the art would recognize, the described exemplary embodiments may be modified in various way all without departing from the spirit or scope of the present invention. Accordingly, the drawing and description are to be regarded as illustrative in nature, and not restrictive.

The technical contents of the present invention will become apparent with the detailed description of preferred embodiment.

The terms "a" and "an" refer to one or to more than one (i.e., to at least one) of the grammatical object of the article.

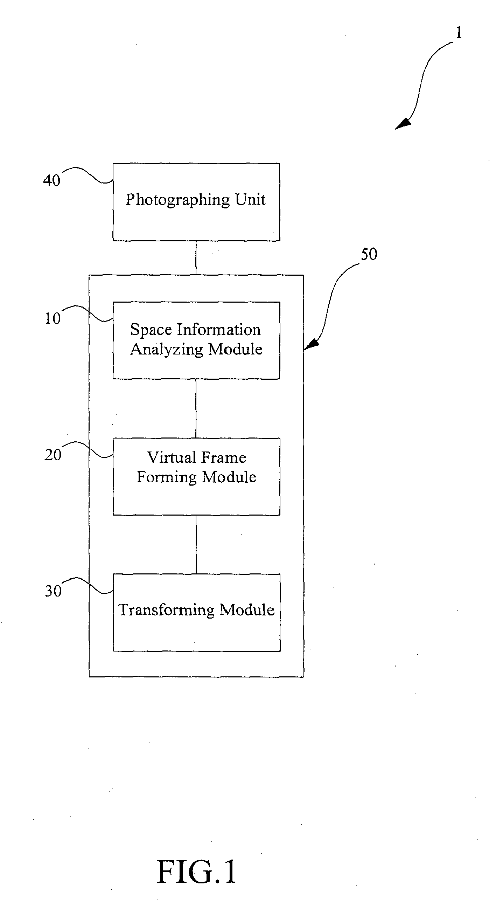

Regarding the technique of the present invention, please refer to FIG. 1. FIG. 1 shows a block diagram of the dynamic image analyzing system of a preferred embodiment of the present invention. As shown in the figures, the dynamic image analyzing system 1 can recognize the user's image and extract the body traits of the user to generate a virtual operating frame, then determines the operating position of the user's hand by the projecting position of the hand at the virtual operating frame. Detail description of the present invention is as follows.

The dynamic image analyzing system 1 of the present invention mainly comprises a photograph unit 40, and a processing unit 50. The processing unit 50 includes a space information analyzing module 10, a virtual frame forming module 20, and a transforming module 30. The space information analyzing module 10 is used to analyze the user image which is photographed by the photographing unit 40, and determine the body portion (such as head, trunk, hands or feet) for acquiring space information about the user at a world space coordinate system. The space information comprises the coordinate position or skeleton data of each portion of the user's body. The skill for extracting the space information of the coordination of specific object from an image is well-known arts and it is not necessary to restate herein.

The virtual frame forming module 20 forms the virtual operating frame according to the space information about the user at the WCS, the WCS is a virtual numerical domain generated by the virtual frame forming module 20 of the dynamic image analyzing system 1, it's not a real spatial entity. The term "virtual operating frame" is a specific spatial range generated based on the user image. When the hands of the user enter the range of the virtual operating frame, the space information analyzing module 10 acquires the position information about the user's hands at the WCS, and transforms the position information via the transforming module 30 into the projection position at the virtual operating frame. If the operated device with respect to the virtual operating frame is a frame on a display, then the projecting position at the coordinate systems of the virtual operating frame will generate a corresponding dynamics on the corresponding position on the frame.

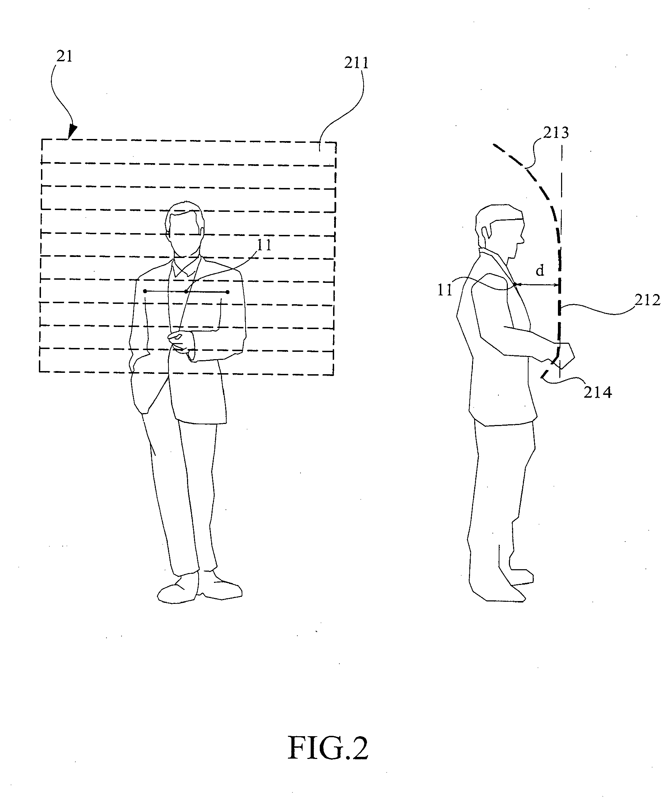

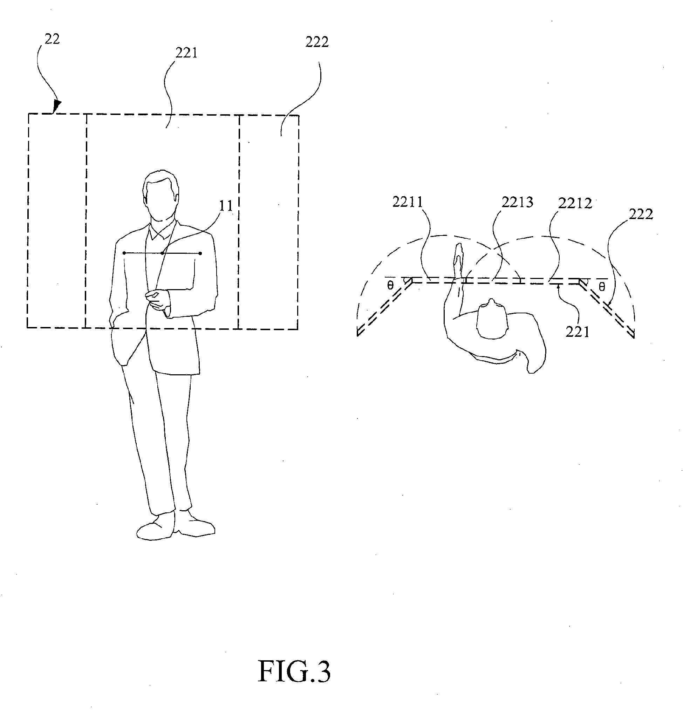

Please refer to FIG.2 and FIG.3. FIG.2 shows a schematic diagram and lateral diagram of the vertical virtual operating frame of a preferred embodiment of the present invention, and FIG.3 shows a schematic diagram and lateral diagram of the horizontal virtual operating frame of a preferred embodiment of the present invention, As shown in the figure: in another exemplar embodiment, the virtual frame forming module 20 generates a vertical virtual operating frame 21 and a horizontal operating frame 22. The terms "vertical/ horizontal" used herein is for the illustration only, the direction of setting for the virtual operating frame is not restricted thereof.

The vertical virtual operating frame 21 comprises a plurality of vertical projecting coordinate systems 211 vertically arranged in the front of the user. The term "vertically arranged" used herein means that the vertical virtual operating frame 21 is split up into a plurality of vertical projecting coordinate systems 211 arranged in a top-down vertical manner with respect to the user, and an included angle is disposed between two adjacent vertical projecting coordinate systems 211, where the vertical projecting coordinate systems are sequentially arranged into an arc-like surface. The degree of said included angle is decided by the position of swing of the user's hand. For example, the swing of the user's hand at the right front is almost a horizontal movement, and the angle herein approximates or equals to 0. In another condition, the swing of the user's hand at the upper front has a greater radian, which results in a larger included angle to match up with the arc-shaped movement of the user's hands.

In another exemplar embodiment, the vertical virtual operating frame 21 is split up into ten vertical projecting coordinate systems 211, and the vertical projecting coordinate systems 211 compose at least three larger segments: a middle virtual frame 212, comprising two vertical projecting coordinate systems 211 each for above and below the shoulder position of the user; an upper virtual frame 213, located at the top of the middle virtual frame 212 and extends backward above the user's head, made up of the vertical projecting coordinate systems 211 upper than the two vertical projecting coordinate systems 211 above the shoulder position of the user; and a lower virtual frame 214, located at the bottom of the middle virtual frame 212 and extends backward to the user, made up of the vertical projecting coordinate systems 211 lower than the two vertical projecting coordinate systems 211 below the shoulder position of the user. The middle virtual frame 212 is located right in front of the user. Once the user operates to the front, the arc-shaped effect of hand swinging is not apparent, so that the middle virtual frame 212 of the virtual operating frame that is located at the front side of the user is formed by projecting the plane while the upper virtual frame 213 and lower virtual frame 214 are two arc-like surfaces connected with the middle virtual frame 212 for matching the arc-like trajectory of the user's hand swinging.

The horizontal virtual operating frame 22 comprises a first projecting coordinate systems 221 horizontally arranged in front of the user. The term "horizontally arranged" used herein means that the horizontal virtual operating frame 22 is split up into several horizontal projecting coordinate systems 221 arranged in right-left horizontal manner with respect to the user, and two second projecting coordinate systems 222 is located at both sides of the first projecting coordinate system 221 where each has an included angle θ thereat, and the two second projecting coordinate systems 222 extends backward to the user. Once the user operates to the front, the arc-shaped effect of hand swinging is not apparent, thus the first projecting coordinate systems 221 in front of the user can be formed by projecting a plane only, and for conforming to the arc-trajectory (as shown in the FIG.3) swung by the user's arm, the included angle θ between the second projecting coordinate systems 222 and the first projecting coordinate system 221 is preferably between 45 and 90 degree and the second projecting coordinate systems 222 each extends backward with respect to the user.

Additionally, the projection at the virtual operating frame can be determined t which hand of the user is to operate. The first projecting coordinate system 221 comprises a left project section 2211 corresponding to the left hand of the user and a right project section 2212 corresponding to the right hand of the user. Because the trajectories of user's swinging hands at the right and left direction are arcs with the center of each circle designated at the user's one shoulder, where the projecting position of those projecting sections can determine which hand is used to operate by the user. Besides, at the right front of the user, the areas of the movements of the two hands will form an overlapping section 2213. Once the hands enter the overlapping section 2213, the extended direction of the projection by the user's hands can determine the right hand or the left hand. The horizontal virtual operating frame 22 also can be composed by a plurality of projecting coordinate systems, for example, if the horizontal virtual frame 22 is split up into five sections, the sections which exceed the shoulders in location will be arranged backward to the user and connected together to form a arc-like bending surface.

Therefore, the dynamic image detecting system 1 of the present invention generates the vertical operating virtual frame 21 and the horizontal operating virtual frame 22 via the virtual fame forming module 20, and the virtual operating frame, corresponding to hand swinging motion of the user, comprising plural planes which form an included angle one with each other, and a projecting position is generated on every projecting coordinate systems, which exactly computes the positions of the user's hands in the virtual operating frame and generates a corresponding projecting position.

In the another exemplar embodiment, after the space analyzing module 10 analyzes the user's image, the space information about the user at the WCS is acquired and a shoulder center 11 information is generated, where the position of the shoulder center 11 forms a virtual operating frame. The virtual operating frame comprises a plurality of virtual frame projecting coordinate systems, and a virtual frame anchor point is designated in the right front of the user, where the virtual frame anchor point is a positional reference during the generation of the virtual operating frame. For example, if the horizontal position of the virtual frame anchor point is located at the center of the shoulders, the vertical position of the shoulder center 11 is at the 2/5 total height of the virtual operating frame, and a predefined distance d is set between the virtual operating frame and the user, and the predefined distance d is about 10∼15cm, then the non-intentional actions such as putting down hands, crossing arms and the like can be avoided. Moreover, for adapting to different body types of users, the space information comprises a shoulder width, and the width and height of the virtual operating frame are proportional to the shoulder width. For instance, when the shoulder width is 45cm, the height and width of the virtual operating frame are 1.2 and 1.33 times of the shoulder width respectively, and the size of the virtual operating frame is 50cm x 60cm. The above description in only for illustration and the position of the virtual frame anchor point and proportional coefficient in the present invention are illustrated without any restriction.

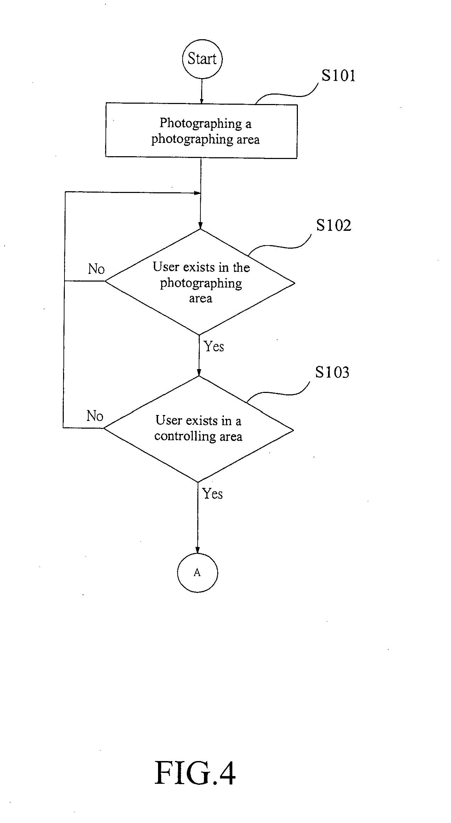

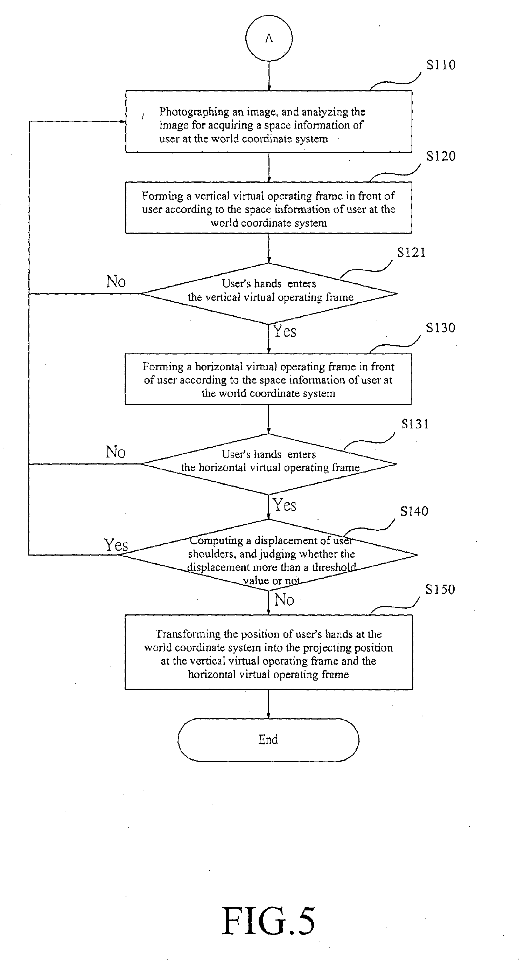

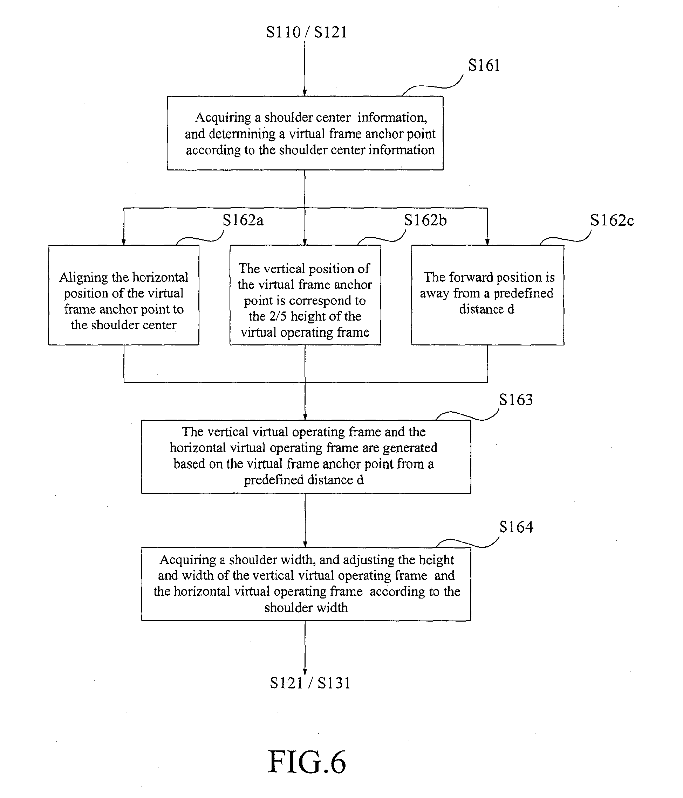

There following illustrates the image operating method of the generation of virtual operating frame of the present invention. Please refer to FIG. 4 to FIG.6 which shows a flow chart of the method of the present invention. The method includes at least the following steps.

Before the start of the method of dynamic image analyzing, a determining process can be pre-executed, the said method comprising: taking a shot for a photographing area (S101), the photographing area is a frame photographed by a camera, which is photographed by the photographing unit 40 of the dynamic image analyzing system 1. If there is no user in the photographing area, which means the user is not in place, then this step is repeated for waiting the user (S102). Otherwise, if the photographing area captures an user image, then determined whether a controlling area exists a user, where the controlling area is the place for user to control the system. If there is no user in the controlling area, it represents the user is not in place, then this step is repeated for waiting the user (S103).

When a user enters the photographing area and is in place in the controlling area, the dynamic image analyzing method of this invention starts the following step: at first, photographing an image, and analyzing the image for acquiring space information about the user at the WCS (S 110), the acquisition of coordinate information for a specific object via an image is a well-known technique in the image processing and we'll not restate herein. A vertical virtual operating frame 21 in front of the user is formed according to the space information about the user at the WCS (S120). If the hands of the user do not enter the vertical virtual operating frame 21, then the executing flow is returned to the step S110 to determine the space information about the user at the WCS again (S121); otherwise, go on to the next step: a horizontal virtual operating frame 22 in front of the user is formed according to the space information about the user at the WCS (S 130). If the user's hands do not enter the horizontal virtual operating frame 22, then the executing flow is returned to the step S110 to determine the space information about the user at the WCS again (S131); otherwise, go on to the next step: computing a displacement of the user's shoulders, and returning to the step S110 when the displacement is greater than a threshold value (S 140). When the user moves or spins, the virtual operating frame will be renewed for keeping in the front of the user; however, if the user just moves his body slightly, the displacement of the user's shoulders is less than the threshold value, and the virtual operating frame does not need to renew the position, to avoid shaking of the projecting position which comes from frequent tuning of the virtual operating frame. Finally, the position of user's hands at the WCS is transformed into the projecting positions at the vertical virtual operating frame 21 and the horizontal virtual operating frame 22 respectively(S150). According, the present invention can detect the projecting positions of user's hands undergoing up, down, left or right swinging sides by means of the vertical virtual operating frame 21 and the horizontal virtual operating frame 22; furthermore, the arc-like projecting coordinate system tied in with the hand swinging of the user makes its generated projecting position to correspond with the dynamics of the user's hand.

Additionally, in another exemplar embodiment, the method at forming the vertical virtual operating frame 21 (S120) or horizontal virtual operating frame 22 (S130) are through the following step to decide the size and position of the virtual operating frame: acquiring a shoulder center 11 information out of the space information, and determining a virtual frame anchor point according to the shoulder center information (S161). For example, the way for deciding the virtual frame anchor point can refer to the above description as aligning the horizontal position of the virtual frame anchor point to the shoulder center 11(S162a), and the vertical position of the virtual frame anchor point is set up at the 2/5 height of the virtual operating frame and corresponds to the shoulder center 11 (S162b), and the residing position is set up in front of the user by a predefined distance d (such as 15cm) (S162c). The vertical virtual operating frame 21 and the horizontal virtual operating frame 22 are generated based on the virtual frame anchor point by a predefined distance d (S163). The relationship between the virtual frame anchor point and the shoulder position is only for explaining but not to restrict the scope of the present invention. Eventually, a shoulder width is acquired from the space information, and the height and width of the vertical virtual operating frame 21 and the horizontal virtual operating frame 22 respectively are adjusted according to a certain ratio of the shoulder width (S164). Therefore, the generated virtual operating frame can be held in front of the user according to the shoulder position of the user, and the size of the virtual operating frames also can be adjusted based on the type of build of the user.

In conclusion, the dynamic image analyzing system of the present invention acquires the space information about the user at the WCS via the space information analyzing module, forms the vertical/ horizontal virtual operating frame by the virtual frame forming module, transforms the user's hand at the virtual operating frame into the projection at the projecting coordinate systems via the transforming module, and transforms the projection at the projecting coordinate systems into a virtual image, wherein the up and down sides and left and right sides of the vertical/ horizontal virtual operating frames respectively includes arc-like projecting coordinate systems to conform to the arc-shaped trajectory by user's arm swinging and to synchronize with the speed of the user's arm swinging. Additionally, the dynamic image analyzing system of the present invention can adjust the size of the virtual operating frame according to the shoulder width of the user, and a predefined distance is set up between the virtual operating frame and the user that excludes the non-intentional operating actions such as hands swinging downward and crossing arms and the like.

While the present invention has been described in connection with certain exemplary embodiments, it is to be understood that the invention is not limited to the disclosed embodiment, but, on the contrary, is intended to cover various modifications and equivalent arrangement include within the spirit and scope of the appended claim, and equivalent thereof.

## Claims

1. A dynamic image analyzing system, comprises:
a photographing unit for taking pictures to acquire images; and
a processing unit including a space information analyzing module, a virtual frame forming module, and a transforming module;
wherein the space information analyzing module is used to acquire space information about a user at a world coordinate system;
the virtual frame forming module is used to acquire the space information about the user at the world coordinate system and to form a vertical virtual operating frame in front of the user, where the vertical virtual operating frame comprises a plurality of vertical projecting coordinate systems vertically arranged in front of the user, an angle is formed in between two adjacent vertical projecting coordinate systems, and the vertical projecting coordinate systems are sequentially arranged in an arc-like surface;
and the transforming module is used to transform the positions of the user's hands at the world coordinate system into the projecting positions at the vertical projecting coordinate systems.

2. The dynamic image analyzing system of claim 1, wherein the vertical virtual operating frame comprises a middle virtual frame, an upper virtual frame located on top of the middle virtual frame and extends toward a backside of the user, and a lower virtual frame located on bottom of the middle virtual frame and extends toward the backside of user.

3. A dynamic image analyzing system, comprising:
a photographing unit for taking pictures to acquire images; and
a processing unit including a space information analyzing module, a virtual frame forming module, and a transforming module;
wherein the space information analyzing module is used to acquire space information about the user at the world coordinate system;
the virtual frame forming module is used to acquire the space information about the user at the world coordinate system and to form a horizontal virtual operating frame in front of the user, where the horizontal virtual operating frame comprises a first projecting coordinate system horizontally arranged in front of the user, and two second projecting coordinate systems distribute at both sides of the first projecting coordinate system and formed an inclined angle with the first projecting coordinate system that extends toward the backside of the user;
and the transforming module used to transform the positions of the user's hands at the world coordinate system into the projecting positions at the first projecting coordinate system and the second projecting coordinate systems.

4. The dynamic image analyzing system of claim 3, wherein the degree of the inclined angle is between 90° and 45°.

5. A dynamic image analyzing system, comprises:
a photographing unit for taking pictures to acquire images; and
a processing unit including a space information analyzing module, a virtual frame forming module, and a transforming module,
wherein the space information analyzing module is used to acquire space information about a user at a world coordinate system;
the virtual frame forming module is used to acquire the space information about the user at the world coordinate system and to form a vertical virtual operating frame and a horizontal virtual operating frame in front of the user, where the vertical virtual operating frame comprises a plurality of vertical projecting coordinate systems vertically arranged in front of the user, an angle is formed in between two adjacent vertical projecting coordinate systems and the vertical projecting coordinate systems are sequentially arranged in an arc-like surface, and the horizontal virtual operating frame comprises a first projecting coordinate system horizontally arranged in front of the user and two second projecting coordinate systems distributed at both sides of the first projecting coordinate system and formed an inclined angle with the first projecting coordinate system that extends toward backside of the user;
and the transforming module is used to transform the positions of the user's hands at the world coordinate system into the projecting positions at the vertical projecting coordinate systems, the first projecting coordinate system and the second projecting coordinate systems.

6. The dynamic image analyzing system of claim 5, wherein the vertical virtual operating frame comprises a middle virtual frame, an upper virtual frame located on top of the middle virtual frame and extends toward backside of user, and a lower virtual frame located on bottom of the middle virtual frame and extends toward backside of the user.

7. The dynamic image analyzing system of claim 5, wherein the angle of inclined angle is between 90° and 45°.

8. A dynamic image analyzing system, comprises:
a photographing unit for taking pictures to acquire images; and
a processing unit including a space information analyzing module, a virtual frame forming module, and a transforming module,
wherein the space information analyzing module is used to acquire space information about a user at a world coordinate system;
the virtual frame forming module is used to acquire the space information of the user at the world coordinate system, generate shoulder center information, and form a virtual operating frame according to the position of the shoulder center information, where the virtual operating frame comprises a plurality of virtual frame projecting coordinate systems;
and the transforming module is used to transform the positions about the user's hands at the world coordinate system into the projecting positions at the virtual frame projecting coordinate systems.

9. The dynamic image analyzing system of claim 8, wherein the space information includes a shoulder width, and the width and height of the virtual operating frame are proportional to the shoulder width.

10. The dynamic image analyzing system of claim 8, wherein the virtual frame forming module generates the virtual operating frame according to the shoulder width from a predefine distance in front of the user.

11. A method for analyzing dynamic image, at least comprises:
(a) acquiring space information of a user at a world coordinate system;
(b) forming a vertical virtual operating frame in front of the user according to the space information about the user at the world coordinate system, where the vertical virtual operating frame includes a plurality of vertical projecting coordinate systems, an angle is formed in between two vertical projecting coordinate systems, and the vertical projecting coordinate systems are sequentially arranged in an arc-like surface;
(c) forming a horizontal virtual operating frame in front of the user according to the space information of the user at the world coordinate system, where the horizontal virtual operating frame comprises a first projecting coordinate system horizontally arranged in front of the user, and two second projecting coordinate systems distributed at both sides of the first projecting coordinate system and formed an inclined angle with the first projecting coordinate system that extends toward backside of the user; and
(d) transforming the positions of the user's hands at the world coordinate system into the projecting positions at the vertical virtual operating frame and the horizontal virtual operating frame.

12. The method of claim 11, wherein the vertical virtual operating frame comprises a middle virtual frame, an upper virtual frame located on top of the middle virtual frame and extends toward backside of the user, and a lower virtual frame located on bottom of the middle virtual frame and extends toward backside of the user.

13. The method of claim 11, further comprises a step (e) between the step (b) and step (c) as below:
acquiring a shoulder center information, and determining a virtual frame anchor point according to the shoulder center information;
generating the vertical virtual operating frame and the horizontal virtual operating frame based on the virtual frame anchor point by a predefined distance in front of the user; and
acquiring a shoulder width, and adjusting the width and height of the vertical virtual operating frame and the horizontal virtual operating frame according to the shoulder width.

14. The method of claim 11, further comprises a step (f) after the step (c) as below:
computing a displacement of the user's shoulders and returning to the step (a) when the displacement is greater than a threshold value.

15. The method of claim 11, further comprises a step (g) after step (b) or step (c) as blow:
if the user's hands does not enter the vertical virtual operating frame or the horizontal virtual operating frame, returning to the step (a).

16. The method of claim 11, further comprises a step (h) before the step (a) as below:
taking a shot on a photographing area;
repeating this step if no user existing in the photographing area; and
repeating this step if no user existing in a controlling area, then repeating this step.

17. A dynamic image analyzing system, comprises:
a photographing unit for taking pictures to acquire images; and
a processing unit including a space information analyzing module, a virtual frame forming module, and a transforming module;
wherein the space information analyzing module is used to acquire space information about a user at a world coordinate system;
the virtual frame forming module is used to access the space information of the user at the world coordinate system and to form a virtual operating frame in front of the user, where the virtual operating frame comprises a plurality of projecting coordinate systems distributed in front of the user, an angle is formed in between two projecting coordinate systems, and the projecting coordinate systems are sequentially arranged in an arc-like surface;
and the transforming module is used to transform the positions of the user's hands at the world coordinate system into the projecting positions at the projecting coordinate systems.
